Europäisches Patentamt

European Patent Office

Office européen des brevets

(11) Veröffentlichungsnummer: **0 380 088**
**A2**

(12) **EUROPÄISCHE PATENTANMELDUNG**

(21) Anmeldenummer: 90101472.0

(22) Anmeldetag: 25.01.90

(51) Int. Cl.⁵: **C09K 3/10**

(30) Priorität: 26.01.89 DE 3902238

(43) Veröffentlichungstag der Anmeldung:
01.08.90 Patentblatt 90/31

(84) Benannte Vertragsstaaten:
AT BE CH DE DK ES FR GB GR IT LI LU NL SE

(71) Anmelder: **JONES, PARKER & CO. LTD.**
**High Holborn House, 52/54 High Holborn**
**London WC1 6RT(GB)**

(72) Erfinder: **Baumgartner, Max, Dr.**
**Werikon Weg 16**
**CH-8006 Zürich(CH)**

(74) Vertreter: **Struck, Willi, Dr.-Ing.**
**Friedrich-Ebert-Strasse 10f**
**D-2080 Pinneberg(DE)**

(54) Aufschäumbare Vergussmasse mit einstellbarer, vorzugsweise längerer Verarbeitungszeit.

(57) Die Erfindung betrifft eine aufschäumbare und vernetzende Vergußmasse mit hoher Dichte und einstellbarer, vorzugsweise längerer Verarbeitungszeit, insbes. als Abdichtmasse für Kalbelgarnituren, für Mauerdurchführungen und dergl., sowie als Korrosionsschutzmasse gegen den Angriff von Feuchtigkeit und Wasser und bezweckt eine preisgünstige aufschäumbare und vernetzende Vergußmasse zu schaffen, die bei mittleren Umgebungsramperaturen von 20°C eine Verarbeitungszeit von 5, vorzugsweise 7 Minuten aufweist.

Erfindungsgemäß wird dazu vorgeschlagen, einer niedrigviskosen Grundmischung aus verzweigten undlinearen, verhältnismäßig kurzkettigen Polyether-Polyolen mit Hydroxylzahlen von 25 bis 1000 aus Propylenoxid und Trimethylolpropan und einer Molmasse vornehmlich von 1000 bis 5000 in Kombination mit verzweigten Polyalkoholen, die Ether- und Estergruppen enthalten, mit Hydroxylzahlen von 150 bis 500, Zusätze von tertiären alipatischen Aminen, wie Dimethylethamolamin, Aktivatoren, Porenreglern, Füllstoffen, Hydrophobierungsmitteln, Flammschutzmitteln, sowie NCO-Polyurethanpräpolymer, Diisocyanat und Wasser beizumischen.

EP 0 380 088 A2

Die Erfindung betrifft eine aufschäumbare und vernetzende Vergußmasse mit hoher Dichte und einstellbarer, vorzugsweise längerer Verarbeitungszeit, insbes. als Abdichtmasse für Kabelgarnituren, für Mauerdurchführungen und dergl., sowie als Korrosionsschutzmasse gegen den Angriff von Feuchtigkeit und Wasser.

Für diese Zwecke ist die Verwendung von Heißvergußmasse auf Bitumenbasis, Kaltvergußmassen aus quellbaren Bitumen- oder Asphaltpulver in Verbindung mit Ölen oder teuren Gießharzen auf PUR- oder EP-Basis bekannt.

Die Nachteile dieser Massen liegen darin, daß die Verarbeitung der Heißvergußmassen nur bei höheren Temperaturen (180°) vorgenommen werden kann, was Unfallgefahr bedeutet. Diese Massen zeigen ferner einen hohen Volumenschwund während der Abkühlung, so daß zum Ausfüllen der Hohlräume später nochmals nachgegossen werden muß. Die hohen Verarbeitungstemperaturen können bei Kabeln den Mantel, die gemeinsame Aderumhüllung und die Isolierhülle schädigen. Außerdem haben die Heiß- und Kaltvergußmassen auf Bitumen-/Öl-Basis einen kalten Fluß und neigen zum abwandern bzw. haben einen Erweichungspunkt/Tropfpunkt, der schon bei etwa 50° liegt. Das bedeutet, oberhalb der genannten Temperaturen entsteht Masseschwund.

Die Bitumenpulver/Öl-Massen zeigen zum Teil stärkere Diffusion durch andere Werkstoffe z.B. Kabel-Isolierstoffe und verändern durch Quellung die spezifischen elektrischen Eigenschaften der Leitschichten in Kabeln.

Die Gießharze dagegen sind teuer und zeigen bei großvolumigen Vergüssen sehr hohe Exothermie, die zu mechanischen Spannungsrissen und Isolationsschädigungen führen kann. Außerdem zeigen sie während der Härtung einen beträchtlichen Volumenschwund, der bei Ausfüllung von Hohlräumen zum Abheben von den Innenwandungen führt und somit keine äußere Abdichtung gegen das Eindringen von Feuchtigkeit in die Gehäuse gewährleistet.

Zur Vermeidung dieser Nachteile soll durch die Erfindung die Aufgabe gelöst werden, eine preisgünstige, aufschäumbare und vernetzende Vergußmasse zu schaffen, die bei mittleren Umgebungstemperaturen von 20°C eine Verarbeitungszeit von 5, vorzugsweise 7 Minuten aufweist, so daß große Mengen der Reaktionskomponenten bis zum Beginn der Startzeit durch Mischen von Hand bequem verarbeitet werden können, wobei durch die längere Verarbeitungszeit der Vergußmasse der Ablauf der chemischen Reaktion bis zur Beendigung der Steigzeit gleichmäßig gesteuert wird, so daß auch auf feuchten oder nassen Substratoberflächen von Werkstoffen bei gleichmäßiger Schaumausbildung eine wesentliche Verbesserung der spezifischen Adhäsion erreicht wird.

Zur Lösung dieser Aufgabe wird erfindungsgemäß bei einer Vergußmasse der eingangs genannten Art vorgeschlagen, einer niedrigviskosen Grundmischung aus verzweigten und linearen, verhältnismäßig kurzkettigen Polyether-Polyolen mit Hydroxyl zahlen von 25 bis 1000 aus Propylenoxid und Trimethylolpropan und einer Molmasse vornehmlich von 1000 bis 5000 in Kombination mit verzweigten Polyalkoholen, die Ether- und Estergruppen enthalten, mit Hydroxylzahlen von 150 bis 500, Zusätze von tertiären aliphatischen Aminen, wie Dimethylethanolamin, Aktivatoren, Porenreglern, Füllstoffen, Hydrophobierungsmitteln, Flammschutzmitteln, sowie NCO-Polyurethanpräpolymer, Diisocyanat und Wasser beizumischen.

Der Zusatz an Polyalkoholen mit Ether- und Estergruppen mit Hydroxylzahlen von 150 bis 500 soll vorzugsweise etwa 30 bis 80 Gewichts-% der Vergußmasse betragen.

Für einen langsamen, gleichmäßigen Reaktionsverlauf auch für Schaumimprägnierungen können der Vergußmasse etwa 20 bis 70 Gewichts-% NCO-PU-Präpolymer aus kurzkettigen, verzweigten Polyether und Polyisocyanaten im Verhältnis 1:20 bis 1:3 zugefügt werden.

Für den Flammschutz kann die Vergußmasse mit einem Zusatz von etwa 5 bis 20 Gewichts-% aus Epichlorhydrin und Bis- (2,3-dibrompropyl) - phosphat versehen werden. Dieses Flammschutzmittel mit 12,5 Gewichts-% Br und 12,2 Gewichts-% P (nach DE-OS 15 70 207) wird während der Polyadditionsreaktion in das Polyurethanmolekül eingebaut, ohne den Reaktionsablauf zu stören und die mechanischen Eigenschaften des Formstoffes zu verschlechtern. Durch den Einbau schwitzt das Flammschutz mittel auch bei höheren Temperaturen nicht aus, wodurch die selbstverlöschenden Eigenschaften erhalten bleiben.

Als zweckmäßig hat es sich erwiesen, die Vergußmasse mit einem Diisocyanat auf MDI-Basis mit erhöhtem 2,4-Isomeranteil zu vernetzen. Durch die sofortige Löslichkeit in Polyetherolen ist ein langsamer und gleichmäßiger Reaktionsablauf gewährleistet. Es treten keine innermechanischen Spannungen auf und es wird eine gleichmäßige Verschäumung von allem auch in den Rand- und Kernzonen des auszufüllenden Hohlraumes erreicht.

Durch Zusatz eines flammenhemmenden Füllstoffes mit 20 bis 100 Gewichts-% Aluminiumhydroxid (z.B. Apyrale) zur Vergußmasse nach der in der DE-OS 23 12 345 bzw. der DE-OS 29 40 749 angegebenen Verfahrensbeschreibung, ist ein guter Flammschutz mit LOI-Werten von über 50% erreichbar. Ferner wird eine Herabsetzung der Rauchbildung beim Brand, Unschädlichkeit der Abbauprodukte, hohe Dichte des Schaumformstoffes , wodurch eine hohe mechanische Festigkeit und bei Dichten von 500 kg/m³ eine wesentlich höhere elektrische Durchschlagfestigkeit als bisher möglich ist, erzielt.

Die erfindungsgemäße Vergußmasse und der daraus hergestellte gehärtete Schaumstoff weist gegenüber bisher bekannt gewordenen Vergußmassen erheblich verbesserte Eigenschaften auf wie, hohe spezifische Adhäsion auf PVC, gefülltem VPE, EPR und fast allen Metallen, Nichtmetallen, Kunst- und Natursteinen usw. und haftet auch auf nassen Oberflächen. Das aufschäumende Raktionsgemisch geht beim Aushärten einen festen und dauerhaften Verbund mit den Deckschichten aus vielen Werkstoffen ein. Die Erzeugung hochbeanspruchter Sandwichelemente mit dem Depotverfahren wird ermöglicht. Durch die lange Topfzeit (bei ca. 23°C bis zur 8 Minuten) können große Volumina verarbeitet werden. Das hervorragende Temperaturverhalten gestattet eine Anwendung zwischen - 20 °C und + 110°C für flammgeschützte Schäume, + 130°C für nichtflammgeschützte Schäume und + 150°C bei speziellen Rezepteinstellungen. Kurzzeitig werden von allen Rezeptvarianten wesentlich höhere Temperaturbelastungen vertragen.

Weitere vorteilhafte Eigenschaften sind eine erhöhte Wärmeleitfähigkeit durch kleine und gleichmäßige Zellgröße, starke Stege zwischen den Zellen und hohe Dichte (Dichtebereich von 100 bis 1000 kg/m³), eine hohe Hydrolysestabilität, eine geringe Wasseraufnahme und eine lange Lagerzeit (min. 36 Monate bei luftdicht verschlossenen Gebinden).

Die Masse ist gut als Konstruktionswerkstoff verwendbar und erlaubt durch ihre Seewasserbeständigkeit auch einen Einsatz im Schiffbau. Die daraus hergestellten Formkörper behalten auch nach Alterung ihre Elastizität.

## Ansprüche

1. Aufschäumbare und vernetzende Vergußmasse mit hoher Dichte und einstellbarer, vorzugsweise längerer Verarbeitungszeit insbes. als Abdichtmasse für Kabelgarnituren, für Mauerdurchführungen und dergl., sowie als Korrosionsschutzmasse gegen den Angriff von Feuchtigkeit und Wasser, dadurch gekennzeichnet, daß einer niedrigviskosen Grundmischung aus verzweigten und linearen, verhältnismäßig kurzkettigen Polyether-Polyolen mit Hydroxylzahlen von 25 bis 1000 aus Propylenoxid und Trimethylolpropan und einer Molmasse vornehmlich von 1000 bis 5000 in Kombination mit verzweigten Polyalkoholen, die Ether- und Estergruppen enthalten, mit Hydroxylzahlen von 150 bis 500, Zusätze von tertiären alipatischen Aminen, wie Dimethylethanolamin, Aktivatoren, Porenreglern, Füllstoffen, Hydrophobierungsmitteln, Flammschutzmitteln, sowie NCO-Polyurethanpräpolymer, Diisocyanat und Wasser beigemischt sind.

2. Vergußmasse nach Anspruch 1, dadurch gekennzeichnet, daß der Zusatz an Polyalkoholen mit Ether- und Estergruppen mit Hydroxylzahlen von 150 bis 500 etwa 30 bis 80 Gewichts-% der Masse beträgt.

3. Vergußmasse nach Anspruch 1 und 2, dadurch gekennzeichnet, daß der Masse etwa 20 bis 70 Gewichts-% NCO-PU-Präpolymer aus kurzkettigen, verzweigten Polyether und Polyisocyanaten im Verhältnis 1:20 bis 1:3 zugefügt sind.

4. Vergußmasse nach Anspruch 1 bis 3, dadurch gekennzeichnet, daß die Masse mit einem Zusatz von etwa 5 bis 20 Gewichts-% aus Epichlorhydrin und Bis- (2,3-dibrompropyl)-phosphat versehen ist.

5. Vergußmasse nach Anspruch 1 bis 4, dadurch gekennzeichnet, daß die Masse einen Härtezusatz mit einem Diisocyanat auf MDI-Basis mit erhöhtem 2,4 Isomeranteil aufweist.

6. Vergußmasse nach Anspruch 1 bis 5, dadurch gekennzeichnet, daß die Masse mit einem flammenhemmenden Füllstoff aus einem Zusatz von etwa 20 bis 100 Gewichts-% Aluminiumhydroxid versehen ist.